# EUROPEAN PATENT SPECIFICATION

(11) **EP 0 690 742 B1**
(45) Date of publication and mention of the grant of the patent: **12.11.1997**
(21) Application number: 94911343.5
(22) Date of filing: 17.03.1994
(51) Int. Cl.: B01D 53/34, F23J 15/00

(54) **METHOD AND APPARATUS FOR CLEANING OF HOT GAS AND EXTRACTION OF ENERGY THEREFROM**
METHODE UND VORRICHTUNG ZUR REINIGUNG VON HEISSEM GAS UND GEWINNUNG VON ENERGIE AUS DEMSELBEN
PROCEDE ET INSTALLATION D'EPURATION D'UN GAZ CHAUD ET DE RECUPERATION D'ENERGIE DANS CE PROCESSUS

(30) Priority: 23.03.1993 SE 9300962
(43) Date of publication of application: 10.01.1996
(73) Proprietor: GRANSTRAND, Lennart, S-113 33 Stockholm (SE)
(72) Inventor: GRANSTRAND, Lennart, S-113 33 Stockholm (SE)
(74) Representative: Larsson, Karin
(86) International application number: SE9400240
(87) International publication number: WO9421356

(56) References cited:
- SE-B- 440 608

## Description

The present invention relates to a method and to an apparatus for cleaning hot contaminated gas and for extracting energy therefrom, particularly gases which are contaminated by acid substances, primarily sulfur oxides, generated by the combustion of solid, liquid or gaseous fuels in both large and small combustion systems.

A large part of the world's energy production is achieved by combusting different fuels, mainly fossil fuels but also biofuels and waste materials in waste-material combustion or incinerating systems. These fuels generate flue gases or exhaust gases which contain contaminants in varying proportions, such as oxides of nitrogen, oxides of sulfur, and different types of dust, including dust that contains heavy metals. All of these substances have a negative effect on the environment. For instance, nitrogen and sulfur oxides acidify soil and water, while substances that contain heavy metals can result in damage to the gene pool of different life forms, among other things.

In addition to environmental problems, certain of the aforesaid substances also cause combustion problems. Particularly troublesome are the sulfur oxides that derive from sulfur-containing substances present in certain fuels. Approximately 1-5% of the sulfur present in the fuel is combusted to sulfur trioxide, which reacts with the water vapour in the gases to generate sulfuric acid, whereas sulfur dioxide formed by the remainder of the sulfur dissolves in water and reacts at least partially with the water to form sulfurous acid. When aqueous solutions of these acid, particularly aggressive substances, condense in combustion systems, the risk of corrosion in heat exchangers, etc., is quite considerable. The condensation also often results in the agglomeration of the solids that accompany the gases, these solids settling on heat-exchanger surfaces, among other things, and therewith impair the heat transfer process. Unfortunately, this condensation occurs at relatively high temperatures, because sulfur trioxide has a strong dew point-increasing effect. In order to avoid condensation, it is generally necessary to accept a certain energy loss, i.e. the gases of combustion are released while containing energy which could be utilized if no sulfur-containing substances were present. In turn, it is necessary to cover this energy loss with a higher fuel consumption, which results in the formation of more contaminants and, in the case of fossil fuels, increases the consumption of finite resources.

The sulfur oxides play a decisive role in enabling combustion gases to be cleaned; the possibility of removing other contaminants from the gases are greatly improved when the gases have been freed from sulfur oxides, since the risk of system corrosion damage is then greatly reduced.

It is therefore desirable from an environmental and economical aspect to enable sulfur-containing fuels to be burned so that the sulfur oxides present in the fumes or exhaust gases, and/or the acids generated by such oxides, are prevented from reaching the outer environment while, at the same time, enabling in principle the entire energy content of the gases to be recovered without causing damage to the combustion system.

A number of different methods and processes are known to the art by means of which the sulfur oxide concentration in flue gases and exhaust gases can be lowered and the sulfur-oxide related damages to combustion systems can be reduced, in combination with improving the recovery of energy from flue gases and exhaust gases.

The sulfur-oxide content of combustion gases can be lowered by
- de-sulfurizing the fuel prior to combustion;
- combusting and de-sulfurizing the fuel simultaneously, primarily in the presence of limestone or dolomite;
- gasifying the fuel by partial oxidation of the fuel followed by de-sulfurization and complete combustion;
- de-sulfurizing subsequent to combustion, by adsorption and/or absorption of solid substances in a reactor; or by
- de-sulfurizing after combustion by absorption with water in a so-called scrubber.

Another known method involves contacting an absorbent solution, often an alkaline solution, in counterflow with the acid gases in a scrubber, therewith neutralizing the gas and enabling the sulfur to be recovered from the used solution in different ways.

The risk of corrosion damage to combustion plants or systems can be reduced by manufacturing the parts exposed to such risk from acid-resistant material. Known material choices in this regard are glass and plastic, and above all acid-resistant steel. SE-B-426,341 (EP-A-0 034 574) describes a method with the aid of which acid flue gases, and particularly sulfur-containing flue gases, can be cooled to temperatures beneath the acid dew point without the materials over which the flue gases pass being attacked to an unacceptable extent. When the flue gases have been cooled to a temperature at which there is a risk of acid condensation, the gases are passed over the heat-exchanging walls of a cooler so as to cool the gases to a temperature beneath 45-55°C and therewith reduce the aggressiveness of the condensate. In the single example described in this publication, the flue gases are cooled to a temperature beneath 50°C, wherein the condensate has a pH-value of 2.2. The publication discloses no method of obtaining a condensate having pH-values closer to 7.

It is also known to combine increased energy recovery from flue gases and exhaust gases with a reduction in the sulfur-oxide content without increasing the sulfur-oxide related damage to combustion plant or systems:

SE-B-405,892 (US-A-4 227 647) describes a flue-gas cooling apparatus which is said to be suitable for oil-fired heating boilers in houses, living apartments or flats and central boiler plants among others, and the purpose of which is to improve the heating boiler efficiency and also to reduce the emission of sulfur containing materials to atmosphere. The apparatus comprises a conventional hot water circulating system and radiators which are heated by this water, wherein the system includes a heat pump whose condenser preheats the water that is recycled to the boiler, while the evaporator cools the flue gases subsequent to said gases having heated the radiator water. The resultant water of condensation is allowed to run through a filter and from there down to the outlet.

SE-B-440,608 (EP-A-0 138 781) describes a method and an apparatus for cleaning gases which have a high water content and which originate, for instance, from the combustion of waste, with regard to hydrochloric acid gas and heavy metals. The flue gases are introduced into the bottom of a first separator stage at a temperature of 200-250°C, in which the gas is brought into contact with finely-divided water, which is sprayed at right angles to the flow direction of the gases from nozzles mounted on the vessel walls. The gases are cooled to a temperature of about 60-70°C, wherein the water present in the gas is able to condense to some extent and the water-soluble substances can be washed from the gases. The water that is not taken-up by the gas is removed and treated in a separate tank. The gas is then led upwardly to a second separation stage in which water is sprayed onto the gas. This water is tapped-off at the bottom of the vessel, is optionally cooled by the evaporator of a heat pump, whereafter the water flow is divided into two sub-flows, of which one is passed through a pH-adjusting device and then recycled to step two, whereas the other sub-flow is passed to stage one. The purpose of the first stage is to clean the gases, whereas the purpose of the second stage is to condense-out sufficient water to clean the gases in stage one. According to one example, the gases have a temperature of about 35°C after stage two. It is evident that a low pressure drop is sought for; with the exception of the water jets issuing at right angles to the gases, the upwardly rising flue gases meet no other obstacle in the apparatus. Consequently, there is a danger of contaminants that are not readily dissolved in water passing through the apparatus, at least at the temperatures recited and at the recited flue gas rate of 9 m³/s. The apparatus is 6 metres in height and 2 metres in diameter. It is obvious that the apparatus and the method are not only intended for flue gases which have high water contents but actually assume that the gases to be treated will have high water contents, for instance gases deriving from the combustion of fuels or waste of high water content; the description mentions generated water quantities (in the second separation stage) of about 0.6 litre/second (= 2,160 l/h). If dry gases are treated, the amount of water tapped-off from the second separation stage will be too small to wash contaminants from the gas in the first stage.

The publication SE-B-448,258 describes an apparatus which is intended to recover energy from flue gases deriving from the combustion of extremely moist solid fuels, such as peat, wood chips and bark, this apparatus having the form of a scrubber. Water is sprayed into the scrubber in a direction at right angles to the direction of gas flow. The water collected in the scrubber is led to a tank and from there to an ion exchanger and a heat exchanger, whereafter the water is pumped back to the scrubber. The arrangement is less suited for use with oil-fired systems, since this would result in difficult acid corrosion problems. The temperature of the gas downstream of the scrubber is said to be about 50°C.

It will be seen from the aforegoing that present-day technology is encumbered with several deficiencies which become ever more serious in the light of the progressively more critical attitude of society with regard to environmental disturbances. It can be expected that the authorities responsible for the care and protection of the environment will, in principle, and in the not too distant future, refuse to allow environmentally hazardous emissions from either industrial processes or from combustion plants and incinerators. It is a general perception within present-day technology that it costs essentially just as much to remove 90% of the contaminants present in the gases as it does to remove the remaining 10%. Present-day technology thus runs the serious risk of becoming too expensive for the environmental demands of new times. A closer analysis of this technology also shows that in principle it is only possible to achieve so-called complete de-sulfurization of flue gases with the use of capital intensive and technically complicated solutions applied primarily on a large scale, and that those solutions relating to improved energy recovery and separability in general are restricted by the quantity of contaminants that can be taken-up by the precipitated water of condensation. Because of the serious risk of corrosion, it is also often necessary to use particular corrosion-resistant materials, which are often expensive, such as stainless steel, or also mechanically weaker materials, such as glass. The after-treatment of sulfur-acidified condensation with calcium-containing substances results in large quantities of waste. It is also necessary to clean the heat exchangers in which the flue gases are cooled at regular intervals, to remove the soot that has adhered in the precipitated condensate. When treating flue gases or exhaust gases in scrubbers, it is necessary to reheat the gases after treatment so as to prevent condensation in the combustion plant or system or in the flue stack outlet, at the same time as large quantities of sulfur-acidified water are often discharged into and contaminate peripheral waterways. Present-day technology provides no solution which is not encumbered with at least one of the aforesaid deficiencies.

The object of the present invention is to provide a method and an arrangement by means of which the aforesaid deficiencies can be removed.

This object is achieved with a method as indicated in claim 1.

When practicing the inventive method, there is injected into the second stage a mass flow of cooling water which is at least two times, preferably at least five times greater than the mass flow of the gas, a particularly preferred range being 5-40 times the gas mass flow. By "gas mass flow" is meant here the mass flow of dry gas, i.e. gas in which its possible content of water and other substances has been ignored.

By "flue gas" is meant here gas that derives from the combustion of solid or liquid fuels, while by "exhaust gas" is meant gas that derives from the combustion of gaseous fuel. The terms "water" and "cooling water" as used in the present document do not only refer to pure water but also include aqueous solutions in which larger or smaller quantities of substances are dissolved and/or dispersed, and also aqueous liquids which include undissolved or non-dispersed particles, and all aqueous liquids which include a substantial amount of water. By "separating or extracting contaminants" is meant in this document the direct removal of contaminants and also the rendering harmless of contaminants by reacting these contaminants with or binding said contaminants to a substance, for instance by neutralizing hydrogen-ions with the aid of hydroxide-ions.

There is obtained with this method a principly completely closed process for cleaning and possibly recovering energy from contaminated hot gases. By cooling the treated gases to unusually low temperatures in accordance with the present invention, there is achieved an improved and highly desirable degree of separation of the contaminants in comparison with present-day technology in this field and at very low costs. This improved degree of separation is also connected with improved fuel economy, since the heat extracted in conjunction with the lowering of temperature can be utilized, for instance with the aid of a heat pump used for heating purposes. Another advantage afforded by the inventive method is that, in principle, the method eliminates the need for bulky and expensive flue stacks; the flue gases and exhaust gases treated in accordance with the inventive method are namely cool, dry and essentially clean and can therefore be discharged to the surroundings through a simple pipe, for instance a plastic pipe.

The method can be applied with completely dry gases and also with gases that contain water in large or small quantities. When the gases contain water, i.e. water vapour, the water vapour condenses in the second stage, together with the water delivered to the first and to the second stage. When practicing the method, water is removed from the system in an amount equal to the amount of water that is carried into the system by the gas, in order to maintain an essentially constant volume of water in operation.

With regard to water-soluble contaminants, the inventive method is particularly suited for cleaning water-containing gases which include acid, corrosive substances, particularly sulfur-containing substances, and then primarily sulfur oxides. This is because the temperature of the gases is lowered to an unusually low temperature, wherewith the reactivity of the corrosive substances with regard to reaction rate decreases much more quickly than the corresponding rate of temperature decrease, and because the amount of cooling water injected in the second stage per unit of time is relatively large in comparison with the amount of water entrained by the gas, and because part of the hydrogen or hydroxonium ions formed upon reaction with water are neutralized or extracted from the water, for instance by reaction with hydroxide ions or by ion exchange. However, one of normal skill in this particular art will have no difficulty in applying the present invention to clean gases from other water-soluble contaminants, for instance basic or neutral contaminants. The amount of water injected in the second stage is suitably at least 25 and preferably at least 100 times greater than the amount of water that is carried by the gas delivered to the system, a particularly preferred range being 100-400 times this entrained water volume.

The inventive method is particularly suited for cleaning flue gases that derive from the combustion of fuels which include water-soluble contaminants and which have a low water content, primarily, but not exclusively, sulfur-containing fuel oil; this is because the gases are cooled to the aforesaid low temperatures. At normal atmospheric pressure, cooling of the gases to about 10°C results in a considerable increase in the extent to which water is extracted from gases deriving from the combustion of fuel oil, in comparison with known techniques. When practicing known techniques, it is possible to cool to temperatures of about 10°C when conditions are favourable, and over shorter periods of time. In the case of the present invention, however, it is possible to achieve a constant gas temperature of about 10°C.

The medium used to cool the heated water by heat exchange may be any fluid which is suitable for this purpose. However, the medium used will preferably be a refrigerant, by which is meant here a fluid whose heat of evaporation or vaporization is used for cooling purposes. In turn, this refrigerant is included preferably in a heat pump process in which subsequent to a heat exchange in a vapourized state, the refrigerant is led away and caused to deliver the heat taken-up thereby for some heating purposes through condensation.

The first and second stages may be carried out while being physically separated, or the stages may be fully integrated with one another so that the gas will be saturated and cooled with cooling water in an unbroken sequence. The time duration of respective stages is only dependent on natural laws. Alternatively, the stages may be partially separate and partially integrated. However, the two stages are often at least partially separated, particularly in those cases when the gas has a high temperature and possibly contains substances which are in themselves aggressive and/or are aggressive in the presence of water, since the space in which the second stage is carried out can then be defined by or configured from material which has a lower thermal and, when applicable, chemical resistance and which is thereby generally less expensive than the material which must be used to construct the space for the first stage; the temperature and therewith the possible aggressivity of the substances are lower in the second stage than in the first stage.

The present invention is also suited for cleaning flue gases that derive from the combustion of fuels which include contaminants which are not-readily dissolved in water or are undissolvable in water, for instance flue gases that derive from the combustion of biofuels containing tar-like substances. This is primarily because separation with water condensation can be effected by bringing the gases into direct contact with cooling water in a labyrinth system, this water being sprayed into or towards the flow path of the gases at a high relative velocity with respect to the gases, wherein the amount of cooling water supplied per unit of time is preferably much greater than the amount of water that is carried by the gases delivered to the system.

The present invention also relates to an arrangement as indicated in claim 13.

The cooling water delivery means mounted in the cooling chamber will preferably include a plurality of spray nozzles, which are suitably directed towards the direction of gas flow. The cooling chamber is also preferably provided with at least one partial partition wall which is so arranged as to cause the gases to pass through a distance which corresponds at least to twice the length of the cooling chamber. In other words, the cooling chamber has arranged therein a labyrinth passageway through which the gases are led. A plurality of spray nozzles are preferably mounted in the labyrinth passageway, suitably at generally regular intervals. This construction makes possible a particularly compact, space-saving and therewith cost-saving construction of the arrangement, wherein the contact surface presented to the delivered cooling water is very large, which in turn implies greatly improved provisions for the transportation of energy and material from the gases to the cooling water.

The contaminant treatment container connected to the cooling chamber will preferably include means for adjusting pH-values preferably in a direction towards a pH-value of about 7. The means used may be any known pH-regulating agent whatsoever and will, of course, be chosen primarily on the basis of the acid or basic nature of the contaminants present in the gases to be treated. For instance, when cleaning gases that derive from the combustion of sulfur-containing oil, the container may contain any known acid neutralizing substance, for instance the product retailed by the company Akvapur AB under the trade name "Hydrolit-Mg", or any known ion-exchanger which can be regenerated at regular intervals. When the contaminants include substances that are not readily dissolved in water, the container will preferably include means for dissolving these substances. For instance, when the gases to be cleaned derive from the combustion of biofuels and contain significant quantities of organic substances and substances that are not readily dissolved in water, the container may be provided with a hydrolysis promoting agent, for instance a basic solution.

The filter for extracting water-insoluble contaminants may include, for instance, a particle barrier mounted upstream of the container and functioning to separate liquid and sedimented particles from the liquid flow. The arrangement may also include a self-cleaning filter, preferably upstream of the pump.

The heat exchanger will preferably include a heat pump, wherein the relatively warm water arriving from the cooling chamber and/or the container delivers heat in the heat pump evaporator to a medium circulating through the pump, preferably to a refrigerant. The thus heated refrigerant is then caused to deliver its heat in the heat pump condenser, for some suitable heating purpose.

It is known that in a normal year with regard to the temperature of the ambient air, there is a need for heating at a low power level, for instance to heat tap water, whereas the need for heating at the highest power level during the year, the peak power period, only prevails for a very short part of the year, generally for a small number of hours, and often in the wintertime, as for instance in Sweden among other countries. During the remainder of the year, i.e. excluding the short periods when peak power is required, the power requirement will, of course, vary between said low power level and the peak power level. It is also known that it is beneficial economically to satisfy the energy requirements occurring during the year with the aid of the combination of a heat pump, which generates heat at a constant power level practically throughout the whole of the year, the so-called base power, while satisfying the need for heat at higher power levels with the aid of a heating boiler which, in this regard, generates power which corresponds to the difference between the relevant high power level and the base power. The power generated by the boiler is varied generally by burning fuel in the boiler intermittently, i.e. at intervals which vary in time to a greater or lesser extent. The capacity of the boiler is often also controlled, for instance by providing the boiler with several burner nozzles which are activated singly for combustion purposes; this reduces the need of operating the boiler intermittently and increases its operating time. When the peak power is relatively high, the boiler will, in practice, often comprise a boiler system, (i.e. a system which includes a plurality of heating boilers) wherein capacity adjustment can also, or alternatively, be effected by activating the individual boilers successively, in accordance with requirements.

According to one preferred embodiment of the present invention, the inventive arrangement is thus used in conjunction with a heating boiler, for instance an oil-fired boiler, which is preferably capacity controlled, said arrangement including a heat pump. In this embodiment, the heat pump is provided with a second evaporator which is arranged in series with the aforesaid evaporator, i.e. the first evaporator. With regard to power, this second evaporator is preferably equal to the first evaporator and may selectively be either of the liquid contacted or the air-contacted kind. The heat pump can be operated continuously and under generally constant operating conditions, by enabling the second evaporator to take-up heat from some other heat source. For instance, during those parts of the year in which the air temperature is relatively high, the ambient air can serve as a heat source for the second evaporator. This is highly beneficial, since it is then possible to utilize the entire heating system, including heating boiler and heat pump, in a particularly economic fashion. When the heating requirement is at its lowest, in principle when the daytime temperature of the ambient air is at its highest, the heating boiler is kept shut-down and the whole of the power requirement is covered by the heat pump, which takes heat from the ambient air via the second evaporator. When the heating requirement is at its highest, i.e. corresponds to the peak power, which occurs generally during the wintertime, that part of the power requirement which corresponds to the base power is covered by the heat pump, which then takes heat from the flue gases from the boiler via the first evaporator, whereas the remainder of the power requirement is covered by the boiler. The power requirements occurring during different periods of the year between these extreme cases is met by the selection of appropriate boiler operating conditions and by appropriate distribution of the heat taken-up by the heat pump between the first and the second evaporator, this distribution being determined by the temperature of the ambient air.

In one alternative embodiment of the present invention, the arrangement is adapted for use in conjunction with the combustion of solid fuels, preferably biofuels such as peat, forest waste and the like. In this embodiment, the cooling chamber is provided with a separate barrier means which functions to isolate more or less solid particles from the water volume that collect on the bottom of the chamber. The particles are collected on the chamber bottom and are removed therefrom at appropriate times, through a sluice valve mounted adjacent the bottom of the chamber. A given quantity of water is also drained from the chamber at the same time, and a valve is therefore preferably provided for delivering water from some suitable external water supply system, this water being conducted to the cooling water delivery means in the cooling chamber, thereby to at least partially clean the chamber. The cooling water delivery means includes a plurality of spray nozzles which in those instances when there is a risk of the nozzles becoming clogged or blocked by particles, the nozzles will preferably be pointed in the gas flow direction. A self-cleaning filter is preferably mounted upstream of the pump, this filter not being described in detail. The container is intended for the treatment of contaminants and in the case of this embodiment includes a suitable hydrolysis promoting agent and/or a surfactant for solubilizing substances and/or substances which are not readily dissolved in water.

The present invention thus solves the majority of the problems associated with known techniques and, in principle, enables all contaminants present in flue gases to be extracted at a cost which, in many instances, is less than the cost required to achieve a 90%-cleaning effect when applying known techniques. The invention provides a solution which is relatively uncomplicated from a technical aspect and which can well be applied on a small scale, particularly in view of the fact that the inventive arrangement can be produced at a product price which is about 50% lower than the price of corresponding arrangements required when practicing known techniques. Since the invention also utilizes energy to a better effect and since the inventive arrangement requires only a small amount of space, the combined economic advantages afforded by the present invention are very large. Because the amount of cooling water delivered to the system is much greater than the amount of water supplied through the gases, the ability of the inventive arrangement to extract contaminants is considerably greater than the known techniques for recovering energy from contaminated flue gases, and particularly sulfur-acid flue gases. The present invention also makes possible the combined recovery of energy from and the cleansing of sulfur-acid flue gases without needing to use expensive material, such as acid-resistant steel, or fragile material such as glass. Furthermore, there is less danger of the inventive arrangement becoming blocked with (solids) soot than in the case of the known techniques. Since the risk of corrosion due to sulfur acid condensates in flue stacks and the like is, in principle, removed by the present invention, the need to reheat the gases after treatment is also removed. The discharge of environmentally harmful sulfur-acidified water is also reduced when practicing the present invention.

The present invention will now be described in more detail with reference to exemplifying embodiments thereof and also with reference to the accompanying drawings, in which
Fig. 1A is a general, schematic side view in section of one embodiment of the invention;
Fig. 1B is a simplified sectional view of the embodiment shown in Fig. 1A when seen from above in said Figure;
Fig. 2A is a detailed illustration of the heat pump circuit in Fig. 1, this circuit including a further evaporator, in this case an air-contacted evaporator;
Fig. 2B is a detailed illustration of the heat pump circuit in Fig. 1, this circuit also being provided with a further evaporator, in this case, however, a liquid-contacted evaporator;
Fig. 2C illustrates part of the cooling water circuit in Fig. 1, although in this case the circuit includes a further heat exchanger;
Fig. 3 is a schematic principle diagram of one embodiment of the invention which is adapted for cleaning flue gases deriving from the combustion of solid fuel;
Fig. 4A illustrates one embodiment of an inventive arrangement schematically from above and in section;
Fig. 4B is a sectional view taken on the line B-B in Fig. 3A;
Fig. 4C is a sectional view taken on the line C-C in Fig. 3A; and
Fig. 4D is a sectional view taken on the line D-D in Fig. 3A.

It will be understood that the sole purpose of the drawings and exemplifying embodiments is to facilitate an understanding of the invention and that the drawings and examples are not intended to limit the scope of the invention in any way.

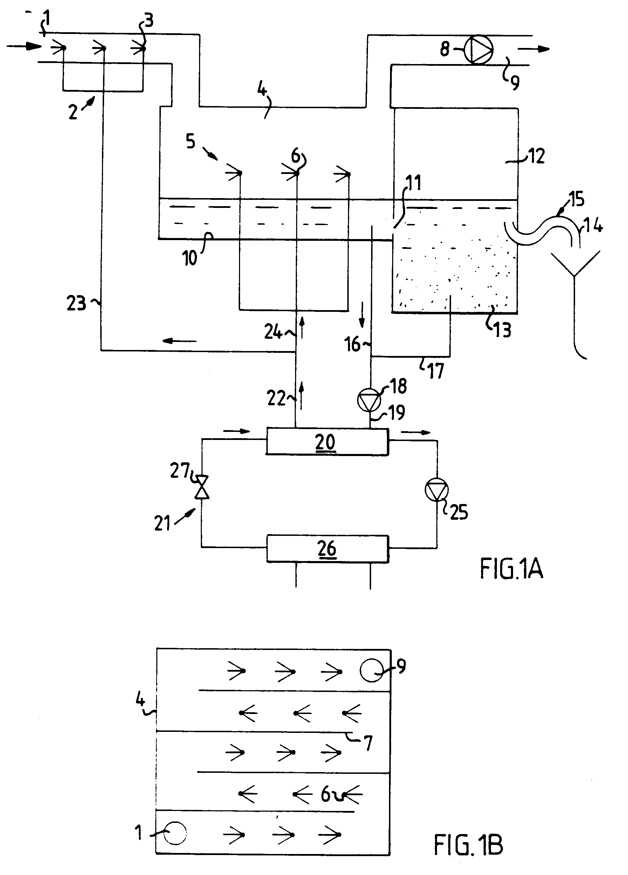

In Fig. 1A, hot contaminated gas is introduced through an inlet passage 1 in which there is mounted a device 2 through which cooling water is delivered. The device 2 includes a plurality of spray nozzles 3 which finely-divide or atomize the cooling water so as to obtain a very large specific surface area contact between gas and water. The hot gas is cooled in the inlet passage 1 at essentially constant enthalpy and is saturated with water. The inlet passage 1 slopes slightly, so as to enable surplus cooling water to run down into a cooling chamber 4, to which the gas is also passed. The cooling chamber 4 is provided with a further cooling water delivery device 5, which also includes a plurality of spray nozzles 6 of essentially the same kind as those in the device 2. The cooling water delivered by the device 5 is brought into contact with the gas, whereby thermal energy contained in the gas is transferred to the cooling water. The amount of water delivered by the device 5 is preferably much greater than the amount of water delivered by the device 2. As will be seen from Fig. 1B, the cooling chamber 4 includes a plurality of partition walls 7 which define a labyrinth system through which the gas is passed. The finely-divided water delivered through the device 5 cools the gas to a temperature of about 10°C prior to the gas being removed from the chamber 4 through an outlet passage 9, with the aid of a fan 8. As the gas cools, practically the entire water content of the gas condensates and falls onto the chamber bottom 10, together with the cooling water delivered to the chamber. The condensing water entrains the contaminants contained by the incoming gas. The mixture of condensation water and cooling water on the bottom 10 dilutes the contaminants. Part of the heated and contaminated water in the chamber 4 is passed to a contaminant treatment container 12 through a connection 11. The water is treated in the container 12 with a filling 13, whereby water-soluble contaminants are extracted at least partially from the water. Water is tapped-off in a quantity corresponding to the amount of water introduced to the system by the gas, via an overflow or weir which is provided with a waterseal 15. The overflow 14 also functions to regulate the level of water in the cooling chamber 4 and the container 12. A subflow is pumped from the heated water in chamber 4 through a conduit 16, while a further subflow is pumped from the container 12 through a conduit 17 and by means of a pump 18, through a conduit 19 and is delivered to a heat exchanger 20 which comprises an evaporator in a heat pump system 21. The conduits 16 and 17 are arranged so that solid and/or semi-liquid material in the cooling chamber 4 and in the container 12 is/are prevented from clogging the conduits. In the illustrated case, the inlet orifices of the conduit 16 and the conduit 17 are spaced from the chamber bottom 10 and from the bottom of the container 12 respectively. It is not necessary per se to provide the arrangement with the conduit 16, i.e. the arrangement can be constructed so that all of the water pumped to the heat exchanger 20 by the pump 18 is taken from the container 12. However, the arrangement will preferably include a conduit 16 so that the container 12 will not become too large and the flow through the conduit 16 will preferably be much greater than the flow through the conduit 17. In the case of large systems in particular, the conduit 17 may instead discharge directly into the cooling chamber 4, in which case the flow through the conduit 17 may be managed by a simple metering pump, for instance. After having been cooled in the heat exchanger 20, the cooling water is passed back to the gas-cleaning process, through conduits 22, 23 and 24, therewith obviating the need to supply fresh cooling water from outside the arrangement. The heat extracted from the water in the heat exchanger 20 is passed to the condenser 26 of the system 21 with the aid of a medium in the heat pump system 21, which is equipped with a compressor 25, and the heat is transferred from the condenser for heating purposes. The medium is passed back to the evaporator 20, through a throttle valve 27.

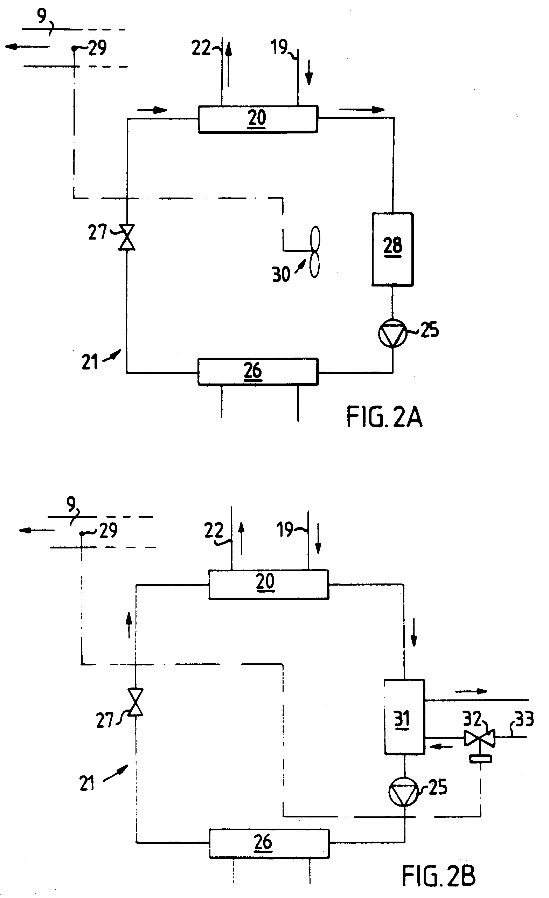

As will be evident from the aforegoing, a preferred embodiment of the invention includes an arrangement which is intended for cleaning flue gases deriving from heating boilers and which coacts with a heat pump provided with a second evaporator, in the aforedescribed manner. Figs. 2A-B illustrate different variants of this embodiment. The heat pump system 21 illustrated in Fig. 2A is provided with a second, air-contacted evaporator 28 which is located between the evaporator 20 and the compressor 25. When the power output from the heating boiler (not shown) decreases as a result of regulating capacity, the temperature of the flue gases led out through the outlet passage 9 will fall, since there is maintained at the same time a constant cooling effect on the evaporator so that the heat pump will deliver constant power. When the temperature in the passage 9 falls to beneath a given predetermined temperature, for instance 10°C, a fan 30 is activated, this fan preferably being speed controlled and governed with the aid of a sensor 29, wherein warm air, such as ambient air or boiler room air (depending on which has the highest energy content) is passed over the air-contacted evaporator 28. The sensor 29 and the fan 30 coact to maintain a constant temperature of 10°C in the passage 9. When the boiler is switched-off (intermittent operation), the fan speed increases to a maximum value. Fig. 2B illustrates another variant of this embodiment, wherein the second evaporator is liquid-contacted. The load on a liquid-contacted evaporator 31 is regulated by a sensor 29 mounted in the outlet passage 9, in a manner corresponding to the variant illustrated in Fig. 2A. When the temperature in the passage 9 has fallen to beneath a given, predetermined value, for instance 10°C, a valve 32 is opened with the aid of a sensor 29, this valve being mounted on a conduit 33 which conducts warm liquid, for instance the return flow from a process stage or the like, to the evaporator 31. The warm liquid flow passed to the heat exchanger through the conduit 31 may also be delivered from an air-contacted heat exchanger (not shown) which is able to take-up heat from boiler room air, ambient air or from exhaust air of a ventilation system or the like.

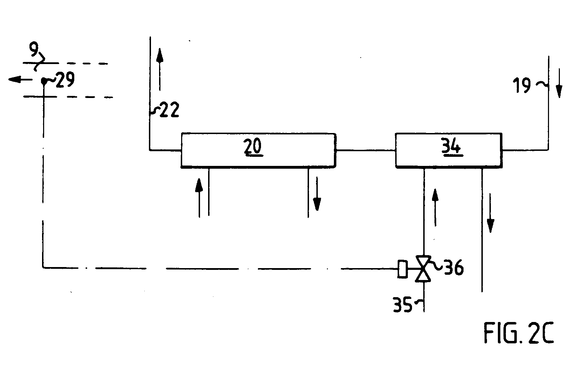

The inventive arrangement can also be configured in the manner illustrated in Fig. 2C while achieving the same purpose as that achieved with the embodiments illustrated in Figs. 2A-B. The arrangement illustrated in Fig. 2C resembles to some extent the arrangement described in SE-B-455,880 (WO-A-8 303 662), wherein a further heat exchanger 34 is provided on the delivery conduit 19 to the evaporator 20. The heat exchanger 34 may optionally be an air-contacted or liquid-contacted heat-exchanger, although in the illustrated case, the heat exchanger is liquid-contacted and warm liquid is delivered thereto through a conduit 35. Heat is transferred in the heat exchanger 34 to the flow of water in the conduit 19 to the evaporator 20. The supply of warm liquid to the heat exchanger 34 is controlled by a valve 36, which in turn is controlled by a sensor 29 in the outlet passage 9.

It will be understood that the control system illustrated in Figs. 2A-C and including the sensor 29, the fan 30 and the valves 32 and 36 may be constructed in many different ways within the scope of the present invention, depending on the particular conditions that apply in each case in which the invention is applied.

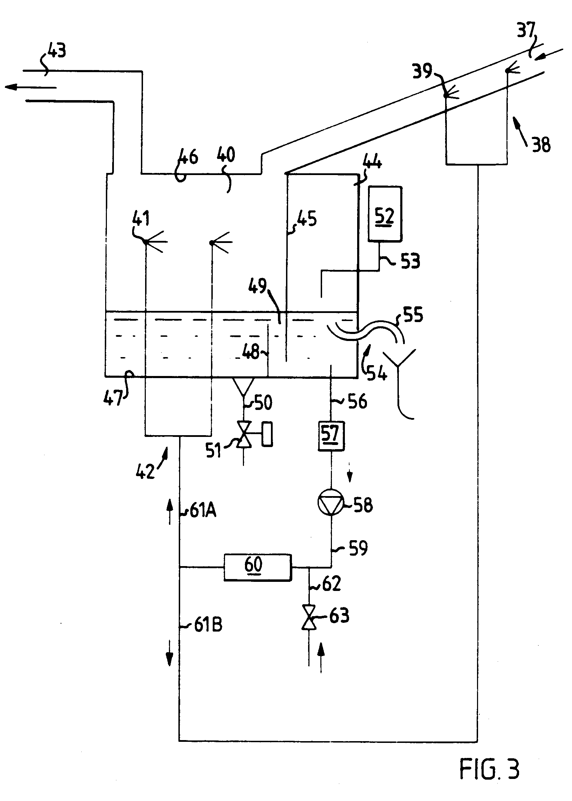

As before mentioned, the invention can also be applied to clean and recover energy from flue gases that derive from the combustion of solid fuels, such as pellets, peat, forest waste and the like, for instance. The sulfur content of the flue gases that derive from the combustion of such fuels is relatively low in general and the problem caused by corrosion is therewith relatively small, whereas, on the other hand, the gas contains relatively large amounts of substances and particles that do not dissolve readily in water, causing the problem, among other things, of sticky deposits on the heat exchanging surfaces and the like. Fig. 3 illustrates the principle construction of an inventive arrangement adapted for cleaning flue gases that derive from solid fuels. Hot contaminated flue gases are introduced through an inlet passage 37, in which finely-divided or atomized cooling water is delivered to a cooling chamber 40 with the aid of a device 38 comprising a plurality of spray nozzles 39. The gases are brought into intimate contact with the finely-divided cooling water in the cooling chamber, this water being delivered through a device 42 comprising spray nozzles 41. The gases are passed through a labyrinth system (not shown) while being sprayed intensively with water. The temperature of the gases at the end of the labyrinth system is about 10°C, and the gases are discharged through an outlet passage 43 with the aid of a fan (not shown) mounted therein. The major part of the contaminants carried into the system by the flue gases are extracted together with the water of condensation. The cooling chamber 40 is bordered by a treatment container 44 having a wall 45 which extends down from the chamber roof 46 and terminates at a short distance from the chamber bottom 47. A wall 48 extends upwards from the chamber bottom 47 close to the wall 45. The height of this upstanding wall 48 is somewhat lower than the normal liquid level in operation. The walls 45 and 48 together form a particle trap or filter 49 for water which flows from the chamber 40 to the container 44. Thus, the water that flows into the container 44 is freed from larger and heavier particles. Particles which settle onto the bottom 47 of the cooling chamber 40 are removed intermittently through an outlet and passed to a drainage conduit 50, the outflow being controlled by means of an appropriately dimensioned valve 51. The bottom 47 slopes so that particle sediments will move towards the outlet, at least in conjunction with removing the sediment, so as to achieve more effective drainage of the bottom 47. Substances which are not readily dissolved in water are treated in the container 44 with the aid of an hydrolysis promoting additive, for instance a caustic solution and/or a dispersion agent, such as a surfactant, this agent or additive being supplied from a tank 52 through a conduit 53. This will accelerate the hydrolysis, at least partial hydrolysis, of at least certainly not readily dissolved organic substances, so as to form readily dissolved substances. Other substances and any particles present form a stable dispersion, with the assistance of the dispersant. This greatly reduces the risk of deposits forming on the various surfaces of the arrangement. A quantity of water which corresponds to the quantity of water delivered to the arrangement by the inflowing flue gases is removed continuously from the container 44, through an overflow 55 provided with a waterseal 54. The level of the water in the chamber 40 and in the container 44 is also controlled in this embodiment with the aid of the overflow 55. The remainder of the water is pumped through a conduit 56 incorporating a self-cleaning filter 57 (not described in detail) by a pump 58 and through a conduit 59 to a heat exchanger 60, which may have the form of an evaporator in a heat pump system, said water being cooled in the heat exchanger with the aid of some suitable medium. The inlet orifice of the conduit 56 is spaced from the bottom of the container 44. After being cooled in the heat exchanger 60, the water is passed through conduit 61a, 61b to the devices 38 and 42 as cooling water, thereby completing the process. For the purpose of delivering water to the system in an amount corresponding to the amount removed from the system when intermittently draining-off sediment, the conduit 59 is connected to a fresh-water conduit 62 which takes water from an external water main. The water supply is controlled by a valve 63, which may, in turn, be controlled selectively by some form of suitable sensor and by an appropriate measuring magnitude, for instance so that the valve 63 is opened in conjunction with drainage through the drainage conduit 50. The fresh water conduit 62 is also used to supply water when the arrangement in general is taken out of operation, either completely or partially, wherein the water delivered through the nozzles 41 also function to rinse-off the inner surfaces of the cooling chamber 40, so as to remove at least part of the solid or semi-liquid material that may have settled on these surfaces. Although not shown, the arrangement may include further spray nozzles for supplying water to the process and for rinsing clean the inner surfaces of the chamber 40.

The spray nozzles 41 may be movably mounted, so as to enable the cooling water to be sprayed selectively concurrently with, in contraflow with or transversely to the direction of gas flow. This nozzle arrangement is primarily intended for use when the gases are so laden with particles that there is a danger of the spray nozzles 41 becoming blocked, in which case the nozzles 41 are turned so as to deliver water concurrently with the gas flow. Alternatively, the inventive arrangement can be provided with fixed spray nozzles which spray either essentially concurrently with, in contraflow to or transversely to the direction of gas flow, or in any desired combination of these spray directions.

It will be understood that the clean flushing system illustrated in Fig. 3 and comprising a drainage conduit 50 and a fresh-water delivery conduit 62 can also be applied in other embodiments of the invention, for instance when cleaning and recovering energy from flue gases that are derived from the combustion of fuel oil. In that case, the fresh-water conduit 62 enables the system to be readily filled with water after an interruption in operation, for instance in conjunction with maintenance.

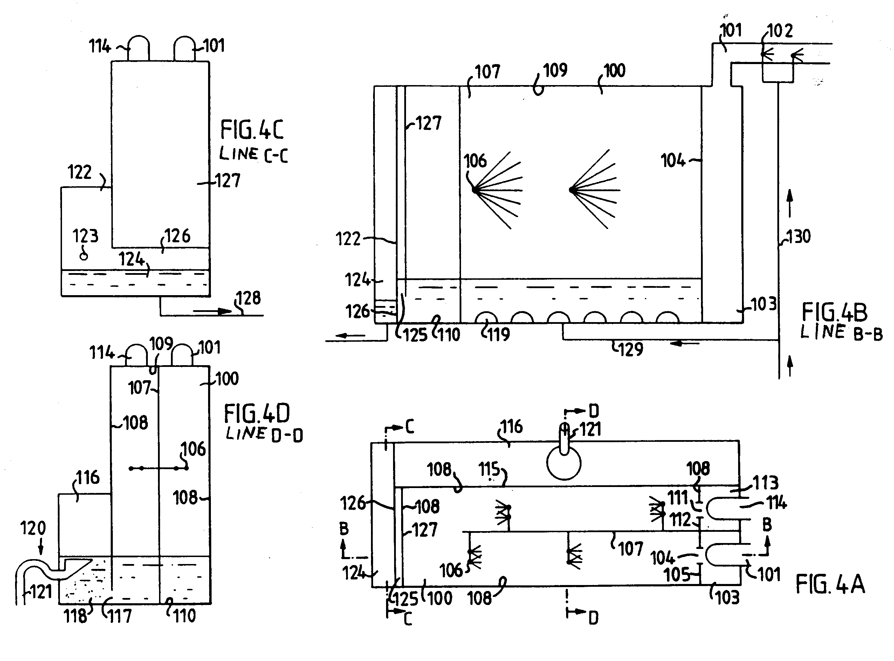

Figs. 4A-D illustrate a part of one embodiment of the inventive arrangement used in the test described in the following Example. In this particular arrangement, hot flue gases that contain oxides of sulfur and that derive from the combustion of fuel oil are passed through an inlet passage 101 into a cooling chamber 100 in which, in a first stage, the gas is saturated with the aid of finely-divided water which is delivered through spray nozzles 102 and from there through a space 103 and a narrow gap 104 in a low or short wall 105. The gap 104 is operative in providing a relatively large pressure drop, thereby to obtain a more uniform gas flow. The flue gases are brought into contact with finely-divided cooling water in the cooling chamber 100 with the aid of the spray nozzles 106. The gases are passed through a labyrinth system formed with the aid of a partition wall 107 and are cooled by the cooling water sprayed thereon to a temperature of about 10°C, wherein, in principle, all of the water contained by the gases condenses and falls onto the bottom 110 of the chamber 100, either directly or via the inner surfaces 108 and the inner roof surface 109 of the cooling chamber. A considerable part of the sulfur content of the gases is entrained by this water. The cool, dry and essentially contaminant-free gases are passed from the arrangement through an outlet passage 114, via a gap 111 in a short or low wall 112 and a space 113. Provided at one long wall 115 of the cooling chamber 100 is a container 116 in which the condensed sulfur-acid water diluted with cooling water is treated. Located between the long wall 115 and the bottom 110, which is common to the cooling chamber 100 and the container 116, is an opening 117 through which part of the water in the cooling chamber 100 is passed into the container 116, in which the water is neutralized with the aid of a generally solid, basic filling 118. To avoid a pressure drop in the water volume collected in the cooling chamber 100, and to facilitate mixing of the water in said chamber, so that the water volume collected on the bottom 110 obtains a more homogenous contaminant content, there is provided in the partition wall 107, beneath the surface of said water volume, a plurality of openings 119. A water volume corresponding to the volume of water entrained by the incoming flue gases is removed from the container 116 via an overflow 121 mounted in the container 116 and provided with a waterseal 120, thereby regulating the level of water in the chamber 100 and the container 116. The container 116 is delimited at one short side thereof by a short or low wall 122. The wall 122 includes an opening 123 through which a flow of neutralized water is introduced into a space 124. Water is also introduced into this space 124 from the cooling chamber 100, through an opening 125 between a low overflow wall 126 and a short or low wall 127 in the cooling chamber 100. The wall 127 is thus arranged in the part opposite to the short wall 105 in the cooling chamber 100. The opening 125 is configured so that the wall 127 will extend slightly downwards from the bottom 110 in the cooling chamber 100. The wall 127 is located on the opposite side of the overflow wall 126 in relation to the space 124. As a result of this configuration of the opening 125, water can be removed continuously from the chamber 100 while holding the gases contained in the chamber 100 at the same time. The opening 125 also enables insoluble particles and the like floating on the water to be separated from the water flowing to the space 124. Thus, neutralized water from the container 116 can be combined in the space 124 with weakly sulfur-acid water which has been freed from insoluble particles and taken from the cooling chamber 100. This combined water volume is then pumped with the aid of a pump (not shown) through a conduit 128 to a heat exchanger (not shown), in which the water delivers heat corresponding to the heat taken-up by the water from the flue gases. The cooling water is then passed through a conduit 129 back to the cooling chamber 100, in which the water is passed through conduits (not shown) in the partition wall 107 to the spray nozzles 106, which are mounted in pairs so all of the gas flowing into the cooling chamber 100 will be cooled more effectively, and also to the spray nozzles 102 mounted in the inlet passage 101, through a conduit 130.

Two examples of tests carried out on an inventive prototype system will now be described with reference to Figs. 4A-C.

### Example 1

Fuel oil having a moisture content of <0.05% and a sulfur content of about 0.2% was burned in an amount corresponding to about 11 kg/h. The flue gases deriving from this combustion process contained about 1.25 kg water/kg combusted oil and thus entrained about 14 kg water/h to the arrangement. The gases were passed at a temperature of about 215°C and at a flow rate of about 167 Nm³/h, through the arrangement inlet passage 101, in which the gases were brought into intimate contact with finely-divided cooling water with the aid of spray nozzles 102, known under the trade mark VeeJet® (capacity size 8010 or 8015), and into the cooling chamber 100. The cooling water had a temperature of about 4°C and was delivered in an amount corresponding to about 0.42 l/min. Since the amount of water required theoretically to saturate the flue gases under those conditions that prevailed in the test was about 0.13 l/min, a significant excess of water was delivered through the nozzles 102. The inlet passage 101 had a diameter of 160 mm and was manufactured from acid-proof steel. The chamber 100 measured:
- Width:: 280 mm
- Length:: 1,000 mm
- Height:: 450 mm

The chamber 100 was constructed of polypropylene. The gases were also brought into direct and intimate contact with finely-divided cooling water in the chamber 100, this water having a temperature of about 4°C. The cooling water was delivered to the chamber 100 in an amount corresponding to about 45 l/min. and was finely-divided in the chamber 100 through the spray nozzles 106, which were of the same kind as the nozzles 102. The total flow of water through the nozzles 102 and 106 was thus about 45 l/min and thus about 195 times the flow of condensate delivered to the system by the gases. It will be noted that the ratio of the amount of water delivered through the nozzles 106 to the amount of water delivered through the nozzles 102 was about 107:1. The finely-divided cooling water had a droplet size of about 600-800 µm. The contact surface area between cooling water and gas was about 7.5 m² per litre of injected water and nozzle. The cleaned gas leaving through the outlet passage had a temperature of about 9.5°C. Subsequent to heat exchange with the flue gases, the temperature of the water was about 10.7°C. The total power transferred from the gases to the water was thus about 20 kW. The filling 118 in the container 116 was comprised of a ball-shaped porous filter material comprising magnesium compounds (MgO-Mg(OH)₂), which is retailed under the name "Hydrolit-Mg" by the company Akvapur AB (Bromma, Sweden).

### Example 2

Example 1 was repeated with the type of fuel oil and with a similar prototype plant, the width of which, however, was 380 mm, and under the same test conditions as those in Example 1, apart from the following exceptions. The gases were introduced into the cooling chamber 100 through the inlet passage 101 of the arrangement at a temperature of about 205°C and at a rate of flow of about 175 Nm³/h, and brought into direct and intimate contact with finely-divided cooling water with the aid of the spray nozzles 102. The cooling water had a temperature of 8.9°C and was delivered in an amount corresponding to about 2 l/min. The gases were brought into contact with the finely-divided cooling water in the chamber 100, wherein the cooling water had a temperature of 8.9°C and was delivered in an amount corresponding to about 56 l/min, which was 245 times greater than the amount of water that accompanied the gases into the system. The contact surface area between cooling water and gas was about 9.3 m² per litre of injected water and nozzle. The cleansed gas leaving through the outlet passage 114 had a temperature of 10°C. After an exchange of heat with the flue gases, the temperature of the water was 13.9°C. The total power transferred was thus about 20 kW. The water condensing from the gases was measured and found to be about 11 kg/h, meaning that the lower cooling temperature in relation to the known technique, i.e. from 35°C to about 10°C, results in greatly improved separation, from about 45% to about 90%.

It should be mentioned that under the conditions recited in the above examples, the amount of water separated per hour is about 6 kg more than when the outflowing gases have a temperature of 35°C in accordance with the known techniques.

## Claims

1. A method for cleaning hot gases, such as flue gases and/or exhaust gases and recovering energy therefrom, said gases including water-soluble and/or water-insoluble contaminants, wherein
- a hot gas is cooled in a first stage by saturating the gas with water delivered in the form of finely-divided cooling water;
- the water-saturated gas is supplied with finely-divided cooling water in a second stage, so that the gas is cooled by heat transfer to the water;
- the cooled gas is led away from the second stage;
- the heated water is led away from the second stage and cooled by heat exchange with a medium which is then used for heating purposes;
wherein
- after being cooled in the first stage, all water is delivered to the second stage in vapour form and optionally in liquid form;
- the amount of cooling liquid delivered per unit of time to the second stage is at least twice as large as the gas mass flow of supplied gas for cooling the gas in the second stage to a temperature of 5-20°C;
- after being cooled by heat exchange, all water is returned to the first and the second stage as cooling water with the exception of an amount which corresponds essentially to the amount of water delivered by the hot gas, said amount of water being removed prior to returning the water to the first and the second stage; and
- the water-insoluble and water-soluble contaminants are separated from the water prior to returning the water to the first and the second stage.

2. A method according to Claim 1, wherein the amount of cooling water delivered to the second stage per unit of time is at least 5 times greater than the gas mass flow of delivered gas.

3. A method according to Claim 1 or 2, wherein the amount of cooling water delivered to the second stage per unit of time is at least 25 times greater than the amount of water that is delivered by the gas.

4. A method according to Claim 1 or 2, wherein the amount of cooling water delivered to the second stage per unit of time is at least 100 times greater than the amount of water delivered by the gas.

5. A method according to any one of the preceding Claims, wherein the hot gas has a temperature of at least 100°C.

6. A method according to any one of the preceding Claims, wherein the contaminants include acid water-soluble substances, and wherein the acid substance is neutralized either totally or partially.

7. A method according to Claim 6, wherein the acid substance contains sulfur oxide.

8. A method according to any one of the preceding Claims, wherein the gas is cooled in the second stage to a temperature of 7-15°C.

9. A method according to any one of the preceding Claims, wherein the gas is cooled in the second stage to a temperature of 7-12°C.

10. A method according to any one of the preceding Claims, wherein the medium is a refrigerant.

11. A method according to any one of the preceding Claims, wherein the first and the second stages are separated physically.

12. A method according to any one of Claims 1-10, wherein the first and the second stages are integrated with one another.

13. An arrangement for carrying out a method according to any one of Claims 1-12 including
- a gas inlet passage (1, 37, 101);
- a cooling water delivery device (2, 39) mounted in the inlet passage (1, 37, 101) for delivering water in a finely-divided state to saturate the gas with water in the first stage;
- a cooling chamber (4, 40, 100) into which the inlet passage (1, 37, 101) discharges;
- a cooling water delivery device (5, 42) mounted in the cooling chamber (4, 40, 100) to deliver cooling water in a finely-divided form into the gas and in an amount per unit of time which is at least twice as great as the gas mass flow of delivered gas, so as to cool the gas in the second stage to a temperature of 5-20°C;
- a container (12, 44, 116) for treating and separating contaminants and connected to the cooling chamber (4, 40, 100);
- optionally filter means (49, 57) for separating water-insoluble contaminants;
- overflow means (14, 55, 121) provided in the cooling chamber (4, 40, 100) or in the container (12, 44, 116) for removing water in an amount which corresponds essentially to the amount of water delivered by the hot gas;
- a heat exchanger (20, 60);
- at least one conduit (17, 19, 56, 59, 128) which connects the container (12, 44, 116) to the heat exchanger (20, 60);
- optionally a conduit (16) which connects the cooling chamber (4, 40, 100) to the heat exchanger (20, 60);
- a pump (18, 58) for pumping water from the container (12, 44, 116) and optionally from the cooling chamber (4, 40, 100) to the heat exchanger (20, 60)
- conduits (22, 23, 24, 61a, 61b, 129, 130) which connect the heat exchanger (20, 60) to the device (2, 39) mounted in the inlet passage (1, 37, 101) and to the device (2, 5, 38, 42) arranged in the cooling chamber (4, 40, 100) for returning essentially all water as cooling water after cooling in the second stage, with the exception of the water removed via the overflow (14, 55, 121); and
- a gas outlet passage (9, 43, 114) connected to the cooling chamber (4, 40, 100).

14. An arrangement according to Claim 13, in which the device (5, 42) arranged in the cooling chamber (4, 40, 100) is provided to deliver cooling water in a finely-divided state and in a quantity which per unit of time is at least 5 times greater than the gas mass flow of delivered gas.

15. An arrangement according to any one of Claims 13 or 14, in which the device (5, 42) arranged in the cooling chamber (4, 40, 100) is provided to deliver cooling water in a finely-divided state and in an amount which corresponds per unit of time to at least 25 times the amount of water delivered by the gas.

16. An arrangement according to Claim 15, in which the device (5, 42) arranged in the cooling chamber (4, 40, 100) is provided to deliver cooling water in a finely-divided state and in a quantity which corresponds per unit of time to at least 100 times the amount of water delivered by the gas.

17. An arrangement according to any one of Claims 13-16, in which the overflow (14, 55, 121) is provided with a waterseal (15, 54, 120).

18. An arrangement according to any one of Claims 13-17, in which the cooling water delivery device (2, 5, 38, 42) arranged in the inlet passage (1, 37, 101) and/or the cooling water delivery device arranged in the cooling chamber (4, 40, 100) includes at least one spray nozzle (3, 6, 39, 41, 102, 106).

19. An arrangement according to any one of Claims 13-18, in which the cooling chamber (4, 40, 100) includes at least one labyrinth-system forming partition wall (7, 107).

20. An arrangement according to any one of Claims 13-19, in which the contaminant treatment container (12, 44, 116) includes a filling (13, 118) which comprises pH-regulating means.

21. An arrangement according to any one of Claims 13-20, in which the contaminant treatment container (12, 44, 116) includes a filling (13, 118) which comprises ion-exchange means.

22. An arrangement according to any one of Claims 13-21, in which the heat exchanger means (20, 60) is comprised of an evaporator in a heat pump system (21).

23. An arrangement according to Claim 22, in which the heat pump system (21) includes a further evaporator (28, 31).

24. An arrangement according to any one of Claims 13-23, in which the arrangement includes a further heat exchanger (34).

## Patentansprüche

1. Verfahren zum Reinigen von Heißgasen, derart wie Rauchgase und/oder Abgase, und zum Zurückgewinnen von Energie aus diesen, wobei die Gase wasserlösliche und/oder wasserunlösliche Verunreinigungen enthalten, wobei
- ein heißes Gas in einer ersten Stufe durch Sättigen des Gases mit Wasser gekühlt wird, das in Form von fein verteiltem Kühlwasser zugeführt wird;
- das wassergesättigte Gas in einer zweiten Stufe mit fein verteiltem Kühlwasser versorgt wird, so daß das Gas durch Wärmeaustausch mit dem Wasser gekühlt wird;
- das gekühlte Gas aus der zweiten Stufe weggeführt wird;
- das erhitzte Wasser aus der zweiten Stufe weggeführt wird und durch Wärmeaustausch mit einem Medium gekühlt wird, das dann für Heizzwecke verwendet wird;
wobei
- nachdem sämtliches Wasser in der ersten Stufe gekühlt wurde, dieses der zweiten Stufe dampfförmig und wahlweise flüssig zugeführt wird;
- die Menge an Kühlflüssigkeit, die pro Zeiteinheit der zweiten Stufe zugeführt wird, wenigstens zweimal so groß ist wie der Gasmassefluß an geliefertem Gas zum Kühlen des Gases in der zweiten Stufe auf eine Temperatur von 5 °C bis 20 °C;
- nachdem sämtliches Wasser durch Wärmeaustausch gekühlt wurde, dieses zu der ersten und der zweiten Stufe als Kühlwasser zurückgebracht wird, mit Ausnahme einer Menge, die im wesentlichen der Menge an Wasser entspricht, die durch das Heissgas zugeführt wird, wobei die Menge an Wasser vor dem Zurückbringen des Wassers zu der ersten und der zweiten Stufe entfernt wird; und
- die wasserlöslichen und wasserunlöslichen Verunreinigungen von dem Wasser getrennt werden, bevor das Wasser zu der ersten und der zweiten Stufe zurückgebracht wird.

2. Verfahren nach Anspruch 1,
**dadurch gekennzeichnet, daß**
die Menge an Kühlwasser, die der zweiten Stufe pro Zeiteinheit zugeführt wird, wenigstens fünf mal größer als der Gasmassefluß an zugeführtem Gas ist.

3. Verfahren nach Anspruch 1 oder 2,
**dadurch gekennzeichnet, daß**
die Menge an Kühlwasser, die der zweiten Stufe pro Zeiteinheit zugeführt wird, wenigstens 25mal größer als die Menge an Wasser ist, die durch das Gas zugeführt wird.

4. Verfahren nach Anspruch 1 oder 2,
**dadurch gekennzeichnet, daß**
die Menge an Kühlwasser, die der zweiten Stufe pro Zeiteinheit zugeführt wird, wenigstens 100mal größer als die Menge an Wasser ist, die durch das Gas zugeführt wird.

5. Verfahren nach einem der vorherigen Ansprüche,
**dadurch gekennzeichnet, daß**
das Heißgas eine Temperatur von wenigstens 100 °C aufweist.

6. Verfahren nach einem der vorherigen Ansprüche,
**dadurch gekennzeichnet, daß**
die Verunreinigungen saure, wasserlösliche Substanzen enthalten, und wobei die saure Substanz entweder völlig oder teilweise neutralisiert wird.

7. Verfahren nach Anspruch 6,
**dadurch gekennzeichnet, daß**
die saure Substanz Schwefeloxid enthält.

8. Verfahren nach einem der vorherigen Ansprüche,
**dadurch gekennzeichnet, daß**
das Gas in der zweiten Stufe auf eine Temperatur von 7 °C bis 15 °C gekühlt wird.

9. Verfahren nach einem der vorherigen Ansprüche,
**dadurch gekennzeichnet, daß**
das Gas in der zweiten Stufe auf eine Temperatur von 7 °C bis 12 °C gekühlt wird.

10. Verfahren nach einem der vorherigen Ansprüche,
**dadurch gekennzeichnet, daß**
das Medium ein Kühlmittel ist.

11. Verfahren nach einem der vorherigen Ansprüche,
**dadurch gekennzeichnet, daß**
die erste und die zweite Stufe physikalisch getrennt sind.

12. Verfahren nach einem der Ansprüche 1 bis 10,
**dadurch gekennzeichnet, daß**
die erste und die zweite Stufe ineinander integriert sind.

13. Anordnung zur Durchführung eines Verfahrens nach einem der Ansprüche 1 bis 12, umfassend
- einen Gaseinlaßdurchgang (1, 37, 101);
- eine Kühlwasserzuführeinrichtung (2, 39), die in dem Einlaßdurchgang (1, 37, 101) zum Zuführen von Wasser in einem fein verteilten Zustand befestigt ist, um das Gas mit Wasser in der ersten Stufe zu sättigen;
- eine Kühlkammer (4, 40, 100), in die der Einlaßdurchgang (1, 37, 101) einmündet;
- eine Kühlwasserzuführeinrichtung (5, 42), die in der Kühlkammer (4, 40, 100) befestigt ist, um Kühlwasser in einer fein verteilten Form dem Gas zuzuführen und in einer Menge pro Zeiteinheit, die wenigstens zweimal so groß wie der Gasmassefluß an zugeführtem Gas ist, um das Gas in der zweiten Stufe auf eine Temperatur von 5 °C bis 20 °C zu kühlen;
- einen Behälter (12, 44, 116) zum Behandeln und trennen von Verunreinigungen, und der an die Kühlkammer (4, 40, 100) angeschlossen ist;
- wahlweise Filtermittel (49, 57) zum Trennen von wasserunlöslichen Verunreinigungen;
- Überlaufmittel (14, 55, 121), die in der Kühlkammer (4, 40, 100) oder in dem Behälter (12, 44, 116) zum Entfernen von Wasser in einer Menge vorgesehen sind, die im wesentlichen der Wassermenge entspricht, die durch das Heißgas zugeführt wird;
- einen Wärmeaustauscher (20, 60),
- wenigstens eine Führung (17, 19, 56, 59, 128), die den Behälter (12, 44, 116) an den Wärmeaustauscher (20, 60) anschließt;
- wahlweise eine Führung (16), die die Kühlkammer (4, 40, 100) an den Wärmeaustauscher (20, 60) anschließt;
- eine Pumpe (18, 58) zum Pumpen von Wasser aus dem Behälter (12, 44, 116) und wahlweise aus der Kühlkammer (4, 40, 100) zu dem Wärmeaustauscher (20, 60);
- Führungen (22, 23, 24, 61a, 61b, 129, 130), die den Wärmeaustauscher (20, 60) an die Einrichtung (2, 39) die in dem Einlaßdurchgang (1, 37, 101) befestigt ist, und an die Einrichtung (2, 5, 38, 42), die in der Kühlkammer (4, 40, 100) angeordnet ist, anschliessen, zum Zurückbringen von im wesentlichen sämtlichem Wasser als Kühlwasser, nach dem Kühlen in der zweiten Stufe, mit Ausnahme des über den Überlauf (14, 55, 121) entfernten Wassers; und
- einen Gasauslaßdurchgang (9, 43, 114), der an die Kühlkammer (4, 40, 100) angeschlossen ist.

14. Anordnung nach Anspruch 13,
**dadurch gekennzeichnet, daß**
die Einrichtung (5, 42), die in der Kühlkammer (4, 40, 100) angeordnet ist, vorgesehen ist, um Kühlwasser in einem fein verteilten Zustand und in einer Quantität zuzuführen, die pro Zeiteinheit wenigstens fünfmal größer als der Gasmassefluß an zugeführtem Gas ist.

15. Anordnung nach einem der Ansprüche 13 und 14,
**dadurch gekennzeichnet, daß**
die Einrichtung (5, 42), die in der Kühlkammer (4, 40, 100) angeordnet ist, vorgesehen ist, um Kühlwasser in einem fein verteilten Zustand und in einer Menge zuzuführen, die pro Zeiteinheit wenigstens 25mal der Menge an Wasser entspricht, die durch das Gas zugeführt wird.

16. Anordnung nach Anspruch 15,
**dadurch gekennzeichnet, daß**
die Einrichtung (5, 42), die in der Kühlkammer (4, 40, 100) angeordnet ist, vorgesehen ist, um Kühlwasser in einem fein verteilten Zustand und in einer Quantität zuzuführen, die pro Zeiteinheit wenigstens 100mal der Wassermenge entspricht, die durch das Gas zugeführt wird.

17. Anordnung nach einem der Ansprüche 13 bis 16,
**dadurch gekennzeichnet, daß**
der Überlauf (14, 55, 121) mit einem wasserdichten Abschluß (15, 54, 120) versehen ist.

18. Anordnung nach einem der Ansprüche 13 bis 17,
**dadurch gekennzeichnet, daß**
die Kühlwasserzuführeinrichtung (2, 5, 38, 42), die in dem Einlaßdurchgang (1, 37, 101) angeordnet ist, und/oder die Kühlwasserzuführeinrichtung, die in der Kühlkammer (4, 40, 100) angeordnet ist, wenigstens eine Spritzdüse (3, 6, 39, 41, 102, 106) umfaßt.

19. Anordnung nach einem der Ansprüche 13 bis 18,
**dadurch gekennzeichnet, daß**
die Kühlkammer (4, 40, 100) wenigstens eine labyrinthsystembildende Trennwand (7, 107) umfaßt.

20. Anordnung nach einem der Ansprüche 13 bis 19,
**dadurch gekennzeichnet, daß**
der Verunreinigungbehandlungsbehälter (12, 44, 116) eine Füllung (13, 118) mit pH-regulierenden Mitteln umfaßt.

21. Anordnung nach einem der Ansprüche 13 bis 20,
**dadurch gekennzeichnet, daß**
der Verunreinigungsbehandlungsbehälter (12, 44, 116) eine Füllung (13, 118) mit ionenaustauschenden Mitteln umfaßt.

22. Anordnung nach einem der Ansprüche 13 bis 21,
**dadurch gekennzeichnet, daß**
das Wärmeaustauschermittel (20, 60) aus einem Verdampfer in einem Wärmepumpensystem (21) besteht.

23. Anordnung nach Anspruch 22,
**dadurch gekennzeichnet, daß**
das Wärmepumpensystem (21) aus einem weiteren Verdampfer (28, 31) besteht.

24. Anordnung nach einem der Ansprüche 13 bis 23,
**dadurch gekennzeichnet, daß**
die Anordnung einen weiteren Wärmeaustauscher (34) umfaßt.

## Revendications

1. Procédé pour épurer des gaz chauds tels que des gaz de combustion et/ou des gaz d'échappement et pour récupérer de l'énergie à partir de ceux-ci, lesdits gaz contenant des impuretés hydrosolubles et/ou non hydrosolubles, dans lequel
- un gaz chaud est refroidi dans un premier étage en saturant le gaz avec de l'eau fournie sous la forme d'eau de refroidissement divisée en fines particules;
- le gaz saturé d'eau est alimenté dans un deuxième étage en eau de refroidissement divisée en fines particules de façon que le gaz soit refroidi par transfert de chaleur vers l'eau;
- le gaz refroidi est évacué du deuxième étage;
- l'eau réchauffée est évacuée du deuxième étage et est refroidie par échange de chaleur avec un agent qui est ensuite utilisé à des fins de chauffage;
dans lequel
- après avoir été refroidie dans le premier étage, toute l'eau est délivrée au deuxième étage sous forme de vapeur et, éventuellement, sous forme de liquide;
- la quantité de liquide de refroidissement délivrée par unité de temps dans le deuxième étage est au moins deux fois plus grande que le débit massique du gaz fourni, pour refroidir le gaz à une température de 5 à 20°C dans le deuxième étage;
- après avoir été refroidie par échange de chaleur, toute l'eau est renvoyée comme eau de refroidissement dans le premier et le deuxième étages, à l'exception d'une quantité qui correspond sensiblement à la quantité d'eau amenée par le gaz chaud, ladite quantité d'eau étant évacuée avant le retour de l'eau dans le premier et le deuxième étages; et
- les impuretés hydrosolubles et non hydrosolubles sont séparées de l'eau avant le retour de l'eau dans le premier et le deuxième étages.

2. Procédé selon la revendication 1, dans lequel la quantité d'eau de refroidissement délivrée au deuxième étage par unité de temps est au moins 5 fois plus grande que le débit massique du gaz fourni.

3. Procédé selon la revendication 1 ou 2, dans lequel la quantité d'eau de refroidissement délivrée au deuxième étage par unité de temps est au moins 25 fois supérieure à la quantité d'eau amenée par le gaz.

4. Procédé selon la revendication 1 ou 2, dans lequel la quantité d'eau de refroidissement délivrée au deuxième étage par unité de temps est au moins 100 fois supérieure à la quantité d'eau amenée par le gaz.

5. Procédé selon l'une quelconque des revendications précédentes, dans lequel le gaz chaud a une température d'au moins 100°C.

6. Procédé selon l'une quelconque des revendications précédentes, dans lequel les impuretés comprennent des substances acides hydrosolubles et dans lequel la substance acide est neutralisée en totalité ou en partie.

7. Procédé selon la revendication 6, dans lequel la substance acide contient de l'oxyde de soufre.

8. Procédé selon l'une quelconque des revendications précédentes, dans lequel le gaz est refroidi à une température de 7 à 15°C dans le deuxième étage.

9. Procédé selon l'une quelconque des revendications précédentes, dans lequel le gaz est refroidi à une température de 7 à 12°C dans le deuxième étage.

10. Procédé selon l'une quelconque des revendications précédentes, dans lequel l'agent est un réfrigérant.

11. Procédé selon l'une quelconque des revendications précédentes, dans lequel les premier et deuxième étages sont séparés physiquement.

12. Procédé selon l'une quelconque des revendications 1 à 10, dans lequel les première et deuxième étages sont intégrés l'un avec l'autre.

13. Agencement pour mettre en oeuvre un procédé selon l'une quelconque des revendications 1 à 12, comprenant
- un passage (1, 37, 101) d'entrée de gaz;
- un dispositif (2, 39) d'alimentation en eau de refroidissement monté dans le passage (1, 37, 101) d'entrée servant à amener de l'eau divisée en fines particules afin de saturer le gaz avec de l'eau dans le premier étage;
- une chambre de refroidissement (4, 40, 100) dans laquelle refoule le passage (1, 37, 101) d'entrée;
- un dispositif (5, 42) de délivrance d'eau de refroidissement monté dans la chambre de refroidissement (4, 40, 100) pour amener, dans le gaz, de l'eau de refroidissement sous une forme finement divisée, et en une quantité par unité de temps qui est au moins deux fois plus grande que le débit massique du gaz fourni, afin de refroidir à une température de 5 à 20°C le gaz dans le deuxième étage;
- un récipient (12, 44, 116) pour traiter et séparer des impuretés et relié à la chambre de refroidissement (4, 40, 100);
- éventuellement, un moyen formant filtre (49, 57) pour séparer des impuretés non hydrosolubles;
- un moyen formant trop-plein (14, 55, 121) disposé dans la chambre de refroidissement (4, 40, 100) ou dans le récipient (12, 44, 116) pour évacuer de l'eau en une quantité qui correspond sensiblement à la quantité d'eau amenée par le gaz chaud;
- un échangeur (20, 60) de chaleur;
- au moins un conduit (17, 19, 56, 59, 128) qui relie le récipient (12, 44, 116) à l'échangeur (20, 60) de chaleur;
- éventuellement, un conduit (16) qui relie la chambre de refroidissement (4, 40, 100) à l'échangeur (20, 60) de chaleur;
- une pompe (18, 58) servant à pomper de l'eau du récipient (12, 44, 116) et éventuellement de la chambre de refroidissement (4, 40, 100) vers l'échangeur (20, 60) de chaleur;
- des conduits (22, 23, 24, 61a, 61b, 129, 130) qui relient l'échangeur (20, 60) de chaleur au dispositif monté dans le passage (1, 37, 101) d'entrée et au dispositif (2, 5, 38, 42) disposé dans la chambre de refroidissement (4, 40, 100) pour renvoyer sensiblement toute l'eau en tant qu'eau de refroidissement après le refroidissement dans le deuxième étage, à l'exception de l'eau évacuée par le trop-plein (14, 55, 121); et
- un passage de sortie de gaz (9, 43, 114) relié à la chambre de refroidissement (4, 40, 100).

14. Agencement selon la revendication 13, dans lequel le dispositif (5, 42) disposé dans la chambre de refroidissement (4, 40, 100) sert à délivrer de l'eau de refroidissement divisée en fines particules, et en une quantité qui, par unité de temps, est au moins 5 fois plus grande que le débit massique du gaz fourni.

15. Agencement selon l'une quelconque des revendications 13 et 14, dans lequel le dispositif (5, 42) disposé dans la chambre de refroidissement (4, 40, 100) sert à délivrer de l'eau de refroidissement divisée en fines particules et en une quantité qui, par unité de temps, est au moins 25 fois la quantité d'eau amenée par le gaz.

16. Agencement selon la revendication 15, dans lequel le dispositif (5, 42) disposé dans la chambre de refroidissement (4, 40, 100) sert à délivrer de l'eau de refroidissement divisée en fines particules, et en une quantité qui, par unité de temps, est au moins 100 fois plus grande que la quantité d'eau amenée par le gaz.

17. Agencement selon l'une quelconque des revendications 13 à 16, dans lequel le trop-plein (14, 55, 121 est pourvu d'un joint (15, 54, 120) étanche à l'eau.

18. Agencement selon l'une quelconque des revendications 13 à 17, dans lequel le dispositif (2, 5, 38, 42) de délivrance d'eau de refroidissement disposé dans le passage (1, 37, 101) d'entrée et/ou le dispositif de délivrance d'eau de refroidissement disposé dans la chambre de refroidissement (4, 40, 100) comportent au moins une buse de pulvérisation (3, 69, 41, 102, 106).

19. Agencement selon l'une quelconque des revendications 13 à 18, dans lequel la chambre de refroidissement (4, 40, 100) comporte au moins une cloison (7, 107) formant un système de labyrinthe.

20. Agencement selon l'une quelconque des revendications 13 à 19, dans lequel le récipient (12, 44, 116) de traitement d'impuretés comporte un garnissage (13, 118) qui contient un moyen de régulation de pH.

21. Agencement selon l'une quelconque des revendications 13 à 20, dans lequel le récipient (12, 44, 116) de traitement d'impuretés comporte un garnissage (13, 118) qui contient un moyen d'échange d'ions.

22. Agencement selon l'une quelconque des revendications 13 à 21, dans lequel le moyen formant échangeur (20,60) comprend un évaporateur dans un système de pompe à chaleur (21).

23. Agencement selon la revendication 22, dans lequel le système de pompe (21) à chaleur comporte un autre évaporateur (28, 31).

24. Agencement selon l'une quelconque des revendications 13 à 23, l'agencement comportant un autre échangeur (34) de chaleur.
